# EUROPEAN PATENT APPLICATION

(11) **EP 1 839 618 A1**
(43) Date of publication of application: **03.10.2007**
(21) Application number: 06006815.2
(22) Date of filing: 31.03.2006
(51) Int. Cl.: A61C 9/00

(54) **Dental retraction device, method of production and use thereof**

(71) Applicant: 3M Innovative Properties Company, St. Paul, Minnesota 55144-1000 (US)
(72) Inventor: Klettke, Thomas, Dr., D-86911 Diessen (DE); Hampe, Rüdiger, D-82234 Wessling (DE)
(74) Representative: Brem, Roland

(57) **Abstract**

The invention relates to a dental retraction device to be used for retracting the gingiva from a prepared tooth, the retraction device having the shape of a cord with a radial and longitudinal direction and comprising an absorbing agent, wherein the retraction device is able to expand in the radial direction, but essentially does not expand in the longitudinal direction upon contact with fluid.

## Description

### Field of the Invention

The invention relates to a dental retraction device and its use for retracting the gingiva from a prepared tooth.

### Background of the Invention

A common method for providing horizontal and vertical retraction is by use of a retraction cord. Thus, a length of retraction cord is packed between gingival tissue and the margin of the prepared tooth by use of an appropriate dental instrument e.g. with Heinemann spatula. It is often necessary to pack several lengths of retraction cord into the sulcus in order to obtain sufficient vertical and horizontal retraction of gingival tissue to be able to make an impression having excellent marginal detail.
Retraction cords of the state of the art mostly consist of knitted cellulose. The cords have a limited capacity of absorbing fluids which would be necessary to clean the area in order to take better impressions.
A description of the background in regard to retraction cords can be found inter alia in US 4,522,593.
The Journal of Prosthetic Dentistry, 1996, Vol. 75, pages 242 to 247 reports on tissue management using a synthetic material called Merocel^{™} as a retraction material.
US 2005/0069838 relates to a dental kit and method for retraction sulcus using an expanding silicone compound or mixture of different silicone compounds.
US 4,871,311 describes a retraction method using a retraction cord made at least in part of an externally accessible superabsorbent swelling material.

### Summary of the Invention

Retraction devices of the state of the art often do not expand sufficiently to conform to surfaces of the gingival mucosa.

In order to at least partially address this problem, the invention provides a dental retraction device to be used for retracting the gingiva from a prepared tooth, the retraction device having the shape of a cord with a radial and longitudinal direction and comprising an absorbing agent, wherein the retraction device is able to expand in the radial direction, but essentially does not expand in the longitudinal direction upon contact with fluid.
The invention also relates to a kit of parts comprising a retraction device and a curable impression material, the setting behaviour of which is not negatively affected, if cured in the presence of the retraction device.
In a further aspect, the invention also relates to methods of producing a dental retraction device.
In another aspect the invention relates to a method of using a polyvinyl alcohol derivative for producing a dental retraction device.

### Definitions

A component or material is characterized as "expandable" within the meaning of the invention, if it is able to undergo an increase in size and volume. This can be caused by contacting the component or material with another substance, e.g. a fluid, which is able to migrate into the component or material.
A device is characterized as being "radial expandable" if it can change its radial shape in at least two dimensions essentially to the same extend. In contrast to this, an expansion in shape in only one dimension is not falling within the term "radial expandable".
"Fluid" within the meaning of the invention shall comprise especially biological fluid, e.g., liquids which are present in a patients mouth like saliva and blood or a mixture of both. Those liquids are mainly comprised of water.
An agent is characterized as being "absorbing" within the meaning of the invention, if the agent is able on contact with fluid to suck up a certain amount of the fluid from the surroundings. This usually goes along with an increase in size and volume of the absorbing substance.
A material or substance is characterized as "flexible" within the meaning of the invention if its 3-dim shape can be altered when applying an external force either manually or with the help of another device or by gravity. A cord is characterized as "flexible" within the meaning of the invention, if it is possible to bend the cord in all directions without undue burden according to the practitioners needs.
A "haemostatic agent" within the meaning of the invention is an agent which is able to reduce bleeding to a certain amount and/or causes blood to coagulate.
A "softening agent" within the meaning of the invention is an agent or additive, which can be added to a composition or material, in order to reduce stiffness. This may be accompanied by a smoother surface compared to the composition or material not comprising a softening agent. The addition of a softening agent can result in a slippery surface, especially if a huge amount (e.g. more than about 10 wt.-% with respect to the weight of the retraction device) is added.
The term "essentially does not" within the meaning of the invention is to be understood that a certain - sometimes unavoidable - effect does usually not take place or only occurs to a minimum amount, wherein the effect does not negatively affect the overall result to be achieved. E.g., an expansion in length of a substance of less than about 20 % or less than about 10 %, is considered as essentially not having taken place.
The setting behaviour of a curable composition is "not negatively affected" within the meaning of the invention, if the setting of the curable composition takes place within the given specification. Small deviations (e.g. within a range of about 5 to 10 %) of physical parameters like Shore hardness, viscosity, working time or setting time, which might occur if e.g. an additive is added or setting takes place in conjunction with other materials or substances (e.g. in the presence of a retraction device), are not considered detrimental.
As used herein, "a", "an", "the", "at least one" and "one or more" are used interchangeably. The terms "comprises" or "contains" and variations thereof do not have a limiting meaning where these terms appear in the description and claims. Also herein, the recitations of numerical ranges by endpoints include all numbers subsumed within that range (e.g., 1 to 5 includes 1, 1.5, 2, 2.75, 3, 3.80, 4, 5, etc.).

### Detailed Description of the Invention

The retraction device of the invention is able to expand in radial direction when contacted with moisture or fluid.
If possible, shrinkage in the linear direction should be avoided, since this could result in contraction and incomplete coverage of the area around the prepared margin.
Expansion in the linear direction is also undesirable as a cord which expands in length could be forced out of the gingival sulcus. In other words the cord essentially keeps its length but expands in radial direction in the presence of moisture or fluid. This expansion is caused by the uptake of fluids, like saliva and/or blood.
However, it can be useful if the retraction device shows a resilient behaviour in the longitudinal direction.
When contacted with fluid, the retraction device should preferably show a delayed expansion of at least about 5 s or at least about 10 s or at least about 15 s in order to allow an easy placement before expansion occurs. This can be achieved for example using a coating to be placed on the surface of the retraction device which starts dissolving or is washed when in contact with fluids, especially oral fluids such as saliva and/or blood.
The retraction device is usually shaped like a cord and preferably flexible in nature. Unlike pastes, a cord can be removed from the sulcus in a standard procedure e.g. with the aid of a pincer.

In a preferred embodiment the retraction device has an essentially cylindrical shape. The retraction device can be up to about 10 cm long. However, even a shorter version can be preferred such as about 1 cm, e.g. if only a small region of the sulcus has to be retracted. Generally, the retraction device has a length in the range of about 1 to about 15 cm or about 5 to about 10 cm.
The diameter of the retraction device (in the non-absorbent status) is not particularly limited, but is usually in the range of about 0.1 to about 4 mm or about 0.2 to about 2 mm. In other embodiments the diameter of the retraction device does not exceed values above about 1 mm or about 0.5 mm.
The diameter of the retraction device after having been contacted with fluid (in the absorbent status) can reach values up to about 0.5 mm or up to about 1 mm or up to about 2 mm or up to about 4 mm or even up to about 6 mm.
The ratio of longitudinal expansion to radial expansion (especially with respect to length) can be greater than 1 to about 10 or greater than 1 to about 20 or even greater than 1 to about 50.
The expansion of the retraction device in radial direction when soaked in deionized water for 1 minute without load can reach values above about 100 % or above about 150 % or above about 200 % related to the diameter of the dry retraction device.
The expansion of the retraction device in longitudinal direction of the retraction device when soaked in deionized water for 1 minute without load usually does not exceed a value of about 30 % or does not exceed a value of about 20 % or does not exceed a value of about 10 % related to the diameter of the dry retraction device.
A useful water uptake of the absorbing agent of the retraction device when soaked in deionized water for about 1 minute without load can reach a value above about 400 wt.-%, or even above about 500 wt.-% related to the weight of the dry absorbing agent of the retraction device.
In one embodiment the absorbing agent of the retraction device is able to absorb up to about 1 ml or up to about 0.5 ml or up to about 0.2 ml of fluid.

The overall volume expansion (including radial and longitudinal expansion) of the absorbing agent can be above about 50 % or above about 70 % or above about 100 % or above about 200 % relative to the original volume measured without external load.
It is within the scope of the invention to use retraction devices having any desired properties like length, diameter, expansion and absorption behaviour.
The fully expanded dimension will be determined by the dimensions of the body opening into which the retraction device is to be inserted.
Thus, if not otherwise indicated, the above mentioned values relate to parameters in respect to a retraction device in an "un-limited" i.e. open volume without external load or other restriction (testing under "in vitro" conditions). Under "in vivo" conditions, that is, if the retraction device is placed in the sulcus of a teeth, the values can differ significantly in view of the fact that the sulcus restrict the retraction device from a complete expansion.
If the retraction device is flexible, easy placement in the gingival sulcus using a common device like a Heinemann spatula is possible.
The absorbing agent may be a uniform body or may be comprised of particles that are in contact with each other, e.g. they may be adhesively fixed to each other.
The absorbing agent can have the shape of a sponge, a solid foam or a woven or non-woven fabric. The absorbing agent preferably comprises an open-pored material.
The predominant amount of pores of the sponge should preferably be arranged in radial direction with respect to the longitudinal axis of the retraction device.
In another embodiment the retraction device can comprise an inner section and an outer section, wherein the inner section comprises a flexible component and the outer section comprises the absorbing agent.
The tear strength of the flexible component should preferably be higher than the tear strength of the absorbing agent. High tear strength resistant components for the inner section are generally preferred.
The absorbing agent may be fixed to a flexible fiber by physical interactions or it may be bonded to it chemically. The fiber can comprise only one filament or a bundle of filaments or fibers. The fiber(s) can comprise a metal like Gold, Platinum, stainless steel or an organic substance such as cotton.
In a further embodiment, the retraction device has a colour being different from red or white. This allows an easy detection in the patients mouth (especially from oral tissue and/or tooth substance) and control if after the treatment all of the retraction device has been removed from the sulcus. Blue, green or violet colour have to be found suitable. Colouring the retraction device can be achieved by incorporating colorants or pigments (organic and anorganic).
It can be desirable that after sealing a wound, the cord does not stick to the coagulated blood. Thus, the surface of the retraction device is preferably made of a material, that does not adhere to the mucosa of the patient.
In this respect, a retraction device having a soft and/or slippery surface is preferred. This could help removing the cord without opening the wound and the danger of bleeding.
In one embodiment, a slippery surface is achieved upon using the device, that is when it is contacted with moisture of fluid present in the patients mouth.
In another embodiment the retraction device comprises a softening agent, like water or glycerine. The amount of softening agent is usually below about 60 % or below about 40 % or even below about 20 % compared to the total uptake capacity of the absorbing agent in order to ensure sufficient fluid uptake in the gingival sulcus.
In a further embodiment the retraction device comprises one of more haemostatic agents. Haemostatic agents (sometimes also referred to as adstringent agents) that may be useful in assisting haemostasis include, but are not limited to aluminum compounds such as potassium aluminum sulfate, aluminum ammonium sulfate, aluminum sulfate, aluminum chlorohydrate, aluminum acetate, other water soluble astringent aluminum salts, and mixtures thereof. Another class of astringent agents includes iron-based compositions such as ferric salts, including but not limited to ferric sulfate, ferric subsulfate, ferric chloride, and mixtures thereof. Other astringents include permanganates, tannins and zinc chloride.
In another embodiment a vasoconstrictor such as epinephrine and/or propylhexedrine can be addded
These agents can be incorporated in the retraction device. This can be achieved by spraying the substance on the device or dipping the device into a composition containing a haemostatic agent or other additive. An other possible way of incorporation is soaking the retraction device in a solution containing the haemostatic agent followed by a drying. Those agents or additives can be present in an amount of about 0.05 g/cm to about 0.1 g/cm retraction device.
When in contact with moisture or fluid in the oral cavity, the moisture or fluid is absorbed by the absorbing agent and the haemostatic agent can be released.
The retraction device should preferably be made of or comprise only non-toxic substances. A substance is classified as non-toxic, if its intended use does not negatively affect the patients health.
Substance which can be used as absorbing agent include at least one of the following substances or derivatives thereof: polyvinyl alcohol, polyurethane, polystyrene, polyolefin, polyvinyl chloride, latex, silicone, fluorpolymer, starch or cellulose.
Substance found to be especially useful as absorbing agent are e.g. polyvinyl alcohol derivatives. The polyvinyl alcohol derivatives can be acetylized. Especially useful are polyacetales. A commericially available polyvinyl alcohol derivative is sold under the trademark Merocel^{™}, manufactured by Xomed Inc., USA.
Manufacturing and properties of such a material is described e.g. in US 4,098,728, the disclosure of which is herewith incorporated by reference. The material can be made by reacting formaldehyde with polyvinyl alcohol under specific conditions.
Preferred polyvinyl alcohols for producing the polyvinyl alcohol derivatives are the medium molecular weight range polyvinyl alcohols, if improvement of the uniformity of the pore size is desired. Generally, the medium molecular weight polyvinyl alcohols have an average molecular weight of between about 35,000 and about 45,000, more usually between about 39,000 and about 42,000.
Also an open cell foam of polyvinylalcohol or esterified or partially esterified polyvinylalcohol might be used. The structure of a retraction device comprising e.g. polyvinyl alcohol derivatives may primarily be composed of hydrophilic fibers.

The desired expansion behaviour of the retraction device can be achieved by different means.
In one embodiment the retraction device comprises an inner flexible cord surrounded by an expandable component.
According to another embodiment the retraction device can be prepared by drying a wet retraction cord under radial compression.
It is also possible to have a fibre made out of the absorbing agent which is interwoven with one or more cords comprising a non-expandable component.
All these cases might result in a completely or partially dried retraction device that expands essentially in radial direction.
The invention is also directed to a kit of parts comprising a retraction device as defined in the text and a curable impression material, the setting behaviour of which is not negatively affected if cured in the presence of the retraction device.
The impresssion materials which can be used in combination with retraction devices are not particularly limited in regard to their chemistry and nature. Polyether moieties or silicone moieties containing impression materials have found to be useful.
Examples of polyether moieties containing impression materials are given in US 6,383,279 (3M ESPE), US 2002/0156149 (HeraeusKulzer) and US 2005/02503871 (Kettenbach). Commercially available materials are sold e.g. under the brand Impregum^{™}.
The kit can further comprise accessories like retraction caps. Retraction caps can be useful for keeping the retraction device in place until an impression is taken. Retraction caps can be made of soft, tissue friendly material, e.g. cotton. However, other materials might be useful as well. If appropriate a temporary restauration can be used as retraction cap, too. Commercially available retraction caps are e.g. sold under the brand Comprecap^{™} (Coltène Whaledent).
The invention is also directed to a method of using an absorbing agent as described in the text of the invention for producing a dental retraction device, the retraction device having the shape of a cord with a radial and longitudinal direction and comprising an expandable component, wherein the retraction device is able to expand in the radial direction, but essentially does not expand in the longitudinal direction upon contact with moisture.
A possible method of using the retraction device of the invention in the dental practice comprises the step of a) providing the retraction device with a suitable length and b) wrapping the retraction device round a prepared tooth structure or inserting the retraction device in the sulcus of a prepared tooth.
Application of the retraction device is preferably done using a device that holds the retraction device in place after placement, such as a retraction cap. Useful equipment is commercially available, e.g. Comprecap^{™}. Another possibility is using a temporary restoration.
The retraction device of the invention is preferably provided to the practitioner under hygienic conditions. One possibility to achieve this is packing the retraction device in a sealed container or foil bag under hygienic conditions.

## Claims

1. A dental retraction device to be used for retracting the gingiva from a prepared tooth, the retraction device having the shape of a cord with a radial and longitudinal direction and comprising an absorbing agent, wherein the retraction device is able to expand in the radial direction, but essentially does not expand in the longitudinal direction upon contact with fluid.

2. The retraction device of claim 1, wherein the ratio of longitudinal expansion to radial expansion is greater than about 1 : to about 10.

3. The retraction device according to any of the preceding claims, wherein the absorbing agent is able to absorb up to about 1 ml of fluid.

4. The retraction device according to any of the preceding claims comprising one or more of the following components: haemostatic agent, softening agent, and colorants.

5. The retraction device according to claim 4, wherein the softening agent is selected from the group consisting of water or glycerine.

6. The retraction device according to any of the preceding claims, wherein the absorbing agent has the shape of a sponge, a solid foam or a woven or nonwoven fabric.

7. The retraction device according to any of the preceding claims, wherein the absorbing agent comprises at least one of the following substances or its derivatives: polyvinyl alcohol, polyurethane, polystyrene, polyolefin, polyvinyl chloride, latex, silicone, fluorpolymer, starch or cellulose.

8. The retraction device according to any of the preceding claims comprising an inner section and an outer section, wherein the inner section comprises a flexible component and the outer section comprises the absorbing agent.

9. The retraction device according to claim 5, wherein the flexible component comprises a fiber comprising a metal and/or an organic substance.

10. A kit of parts comprising a retraction device as defined in any of the preceding claims and a curable impression material, the setting behaviour of which is not negatively affected if cured in the presence of the retraction device.

11. A method for producing a dental retraction cord as defined in any of the preceding claims comprising the step of
- drying the wet retraction device under radial compression or
- interweaving the absorbing agent with a flexible component, which is a non-expandable cord.

12. A method of using an absorbing agent for producing a dental retraction device, the retraction device having the shape of a cord with a radial and longitudinal direction and comprising an absorbing agent, wherein the retraction device is able to expand in the radial direction, but essentially does not expand in the longitudinal direction upon contact with fluid.
